# EUROPEAN PATENT APPLICATION

(11) **EP 1 424 622 A1**
(43) Date of publication of application: **02.06.2004**
(21) Application number: 02026483.4
(22) Date of filing: 27.11.2002
(51) Int. Cl.: G06F 1/18

(54) **Housing structure for computer host**

(71) Applicant: Lee, Kevin, Pa-The City, Tao-Yuan Hsien (TW)
(72) Inventor: Lee, Kevin, Pa-The City, Tao-Yuan Hsien (TW)
(74) Representative: VOSSIUS & PARTNER

(57) **Abstract**

A housing structure for computer host mainly includes a housing case being covered with transparent protective sheets to avoid unexpected scratches on outer surfaces when the computer host is moved. An arched handle is attached to a top of the housing case for easily lifting up and carrying the entire computer host to different places. Illuminating sources may be embedded in or attached to the protective sheets to create a unique modern and eye-catching appearance for the housing case.

## Description

The present invention relates to a housing structure for a computer host, and more particularly to a host housing case that is provided with means to enable convenient lifting up and moving thereof, and with protective sheets to avoid unexpected scratches on outer surfaces during movement thereof.

A computer host typically includes an internally mounted main board for executing logic operations. A front side of the host usually includes a power switch, a universal serial bus (USB) port, and other data access devices, such as a CD ROM and a disk drive or a CD recorder, and a rear side of the host usually includes various interface card slots for different peripherals to connect thereto.

The entire computer host is enclosed in a generally U-shaped housing case that is supported on a mounting frame and closed with a front panel. There are times the computer host must be relocated. The housing case, the mounting frame, the front panel, as well as the internal devices, such as the power supply, the cooling fan, the main board, etc., together make the host considerably heavy and uneasy to move. A user might even be injured due to an unexpectedly fallen computer host. It is therefore desirable to develop a host housing structure that enables easymoving of the entire host.

Moreover, most conventional host housing cases have a fixed configuration in gray color. The only change of the housing case lies in different curves designed for the front panel. The entire host housing case therefore looks monotonous and dull, and tends to become dirty with the gray color.

A primary object of the present invention is to provide a housing structure for computer host that includes a housing case having an arched handle attached to a top thereof, so that a space is defined between the top and the handle for a user's hand to extend therethrough and conveniently lift up and carry the entire host to a different place.

Another object of the present invention is to provide a housing structure for computer host that includes a waved top surface to provide increased antislipping effect.

A further object of the present invention is to provide a housing structure for computer host that includes a housing case being covered at a front and two lateral surfaces with transparent protective sheets to avoid unexpected scratches on these surfaces when the host is being moved.

A still further object of the present invention is to provide a housing structure for computer host that includes a housing case being covered at a front and two lateral surfaces with colored transparent protective sheets to create a unique modern appearance for the entire host housing case.

A still further object of the present invention is to provide a housing structure for computer host that includes a housing case being covered at a front and two lateral surfaces with transparentprotective sheets while the protective sheets include illuminating sources either embedded in the sheets or attached to perimeters thereof to create a decorative effect for the housing case.

These objects are achieved with the features of the claims.

The structure and the technical means adopted by the present invention to achieve the above and other objects can be best understood by referring to the following detailed description of the preferred embodiments and the accompanying drawings, wherein
Fig. 1 is a front perspective view of a host housing structure according to an embodiment of the present invention;
Fig. 2 is an exploded perspective view of Fig. 1;
Fig. 3 is a rear perspective view of Fig. 1;
Fig. 4 is a side view of Fig. 1;
Fig. 5 is an enlarged perspective view of the encircled area shown in Fig. 2;
Fig. 6 shows a first embodiment of a transparent protective sheet adopted in the present invention;
Fig. 7 shows a second embodiment of the transparent protective sheet adopted in the present invention; and
Fig. 7A is an enlarged view of the encircled area shown in Fig. 7.

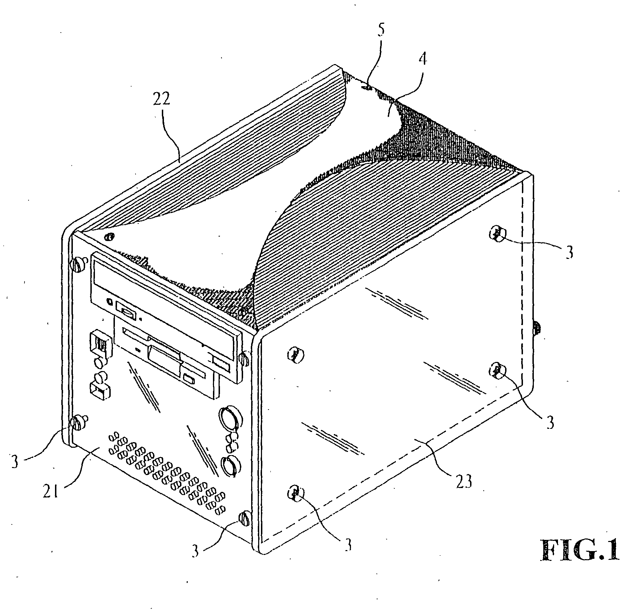

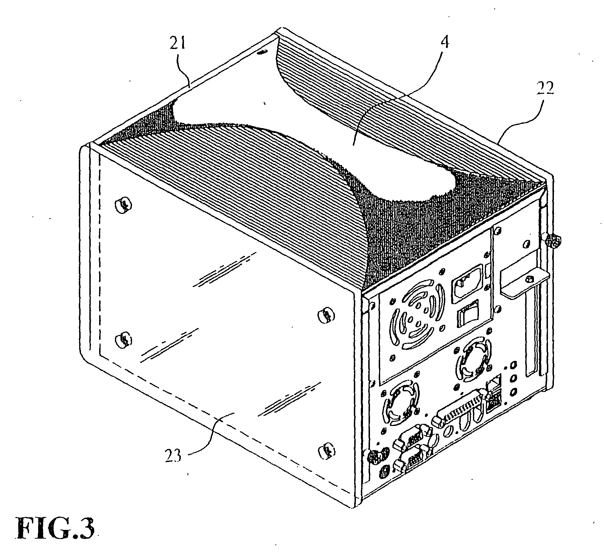

Please refer to Figs. 1, 2, and 3. The present invention relates to a housing structure for a computer host. The host housing structure includes a housing case 1 that defines an internal space for accommodating some prerequisite elements for a computer, such as a main board, a power supply, interface cards, etc. There are still other important devices being mounted to a front of the housing case 1, such as a CD ROM, a disk drive, a power switch, etc., and to a rear side thereof, such as a cooling fan, radiating holes, connectors for connecting peripherals. In the present invention, the host housing structure further includes transparent protective sheets 21, 22, and 23 provided to attach to the front and two lateral sides of the housing case 1, respectively, by means of screws 3, so that the protective sheets 21, 22, and 23 are screwed to outer surfaces of the housing case 1 at predetermined positions.

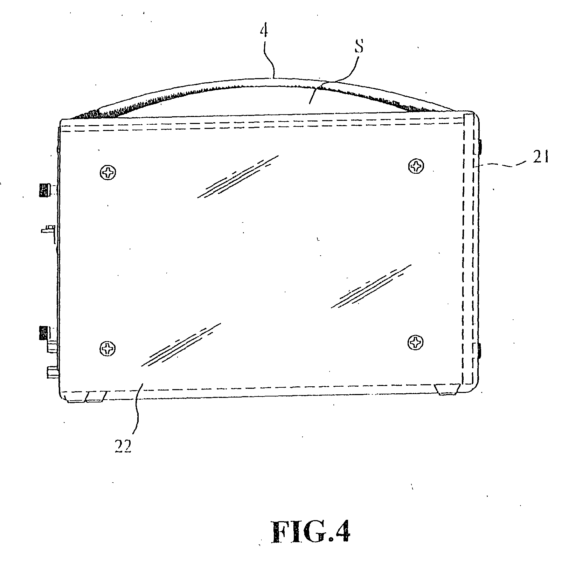

An arched handle 4 is fastened to a top of the housing case 1 by means of screws 5. Please refer to Fig. 4. A space S is defined between the arched handle 4 and the top of the housing case 1. The space S is large enough for a user's fingers to extend therethrough to lift up and carry the entire computer host to a different place.

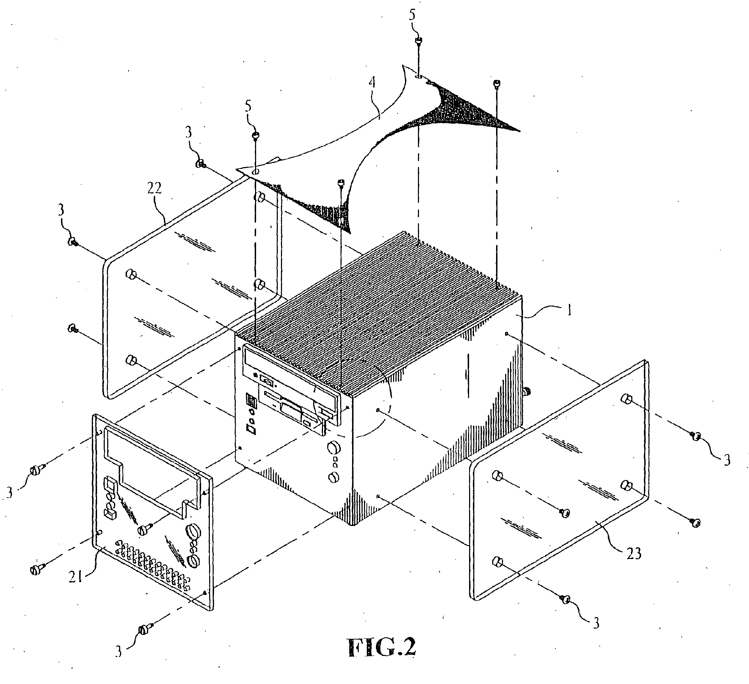

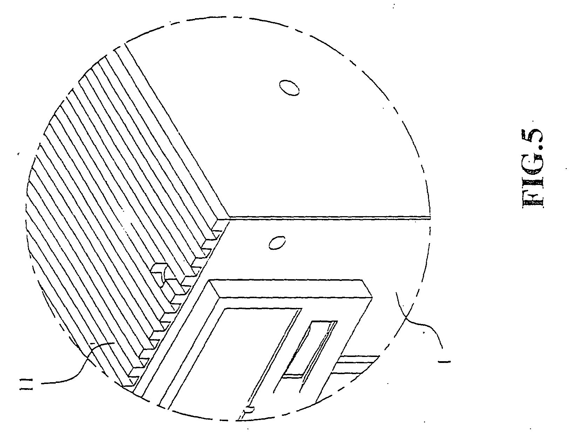

As can be seen in Fig. 5, which is an enlarged view of the encircled area shown in Fig. 2, a plurality of parallel ribs are formed on the top of the housing case 1 to provide a waved surface 11 that provides an increased antislipping effect.

The transparent protective sheets 21, 22, and 23 may be colored sheets, so that they not only protect outer surfaces of the housing case 1, but also create unique modern appearance and good merchandising attraction for the entire housing case 1.

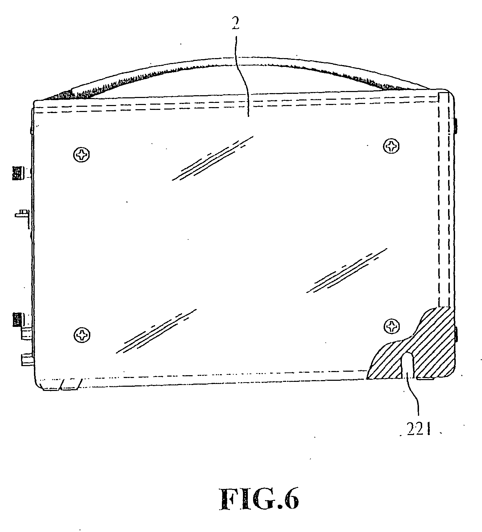

In an embodiment of the transparent protective sheet 22 as shown in Fig. 6, there is provided an embedded illuminating source 221. The illuminating source 221 gives out lights in the protective sheet 22 to make the entire housing case 1 extremely unique and eye-catching. It is understood that additional illuminating sources 221 may also be embedded in the protective sheets 21 and 23 as desired.

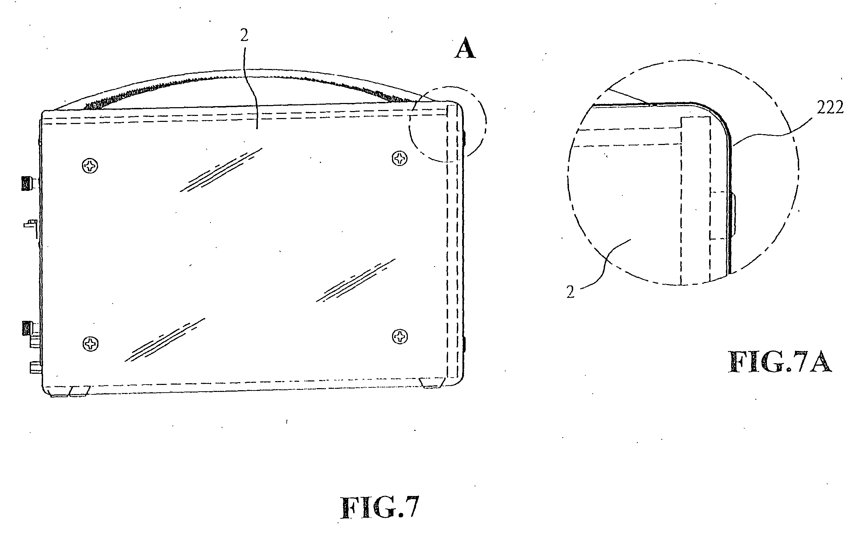

In another embodiment of the transparent protective sheet 22 as shown in Fig. 7, there is provided a cold light strip 222 or other similar strip-like illuminating source attached to a perimeter of the protective sheet 22, so that lights given out from the cold light strip 222 transmit through the transparent protective sheet 22 to create an even and soft lighting effect on the housing case 1.

With the above-described arrangements, the entire housing structure for computer host according to the present invention could be more easily carried and relocated when necessary and protected against scratches on its outer surfaces, and creates an aesthetic appearance.

## Claims

1. A housing structure for computer host, comprising:
a housing case defining an internal space for accommodating prerequisite elements for a computer, such as a main board, a power supply, interface cards, etc. , said housing case also having other necessary devices mounted to a front side thereof, such as a CD ROM, a disk drive, a power switch, etc., and to a rear side thereof, such as a cooling fan, radiating holes, and connectors for peripherals to connect thereto;
a plurality of transparent protective sheets fastened to outer surfaces of said housing case by means of screws or other similar fastening means; and
an arched handle attached to a top of said housing case by means of screws, so that a space large enough for a user's fingers to extend therethrough is defined between said handle and said top of said housing case.

2. The housing structure for computer host as claimed in claim 1, wherein said top of said housing case is formed into a waved surface.

3. The housing structure for computer host as claimed in claim 1 or 2, wherein said transparent protective sheets have illuminating sources embedded therein.

4. The housing structure for computer host as claimed in claim 1, 2 or 3, wherein said transparent protective sheets are provided along their perimeters with strip-shaped illuminating sources.

5. The housing structure for computer host as claimed in any of claims 1 to 4, wherein said transparent protective sheets are colored sheets.
